# EUROPÄISCHE PATENTSCHRIFT

(11) **EP 0 898 540 B1**
(45) Veröffentlichungstag und Bekanntmachung des Hinweises auf die Patenterteilung: **20.02.2002**
(21) Anmeldenummer: 97923875.5
(22) Anmeldetag: 12.05.1997
(51) Int. Cl.: B62D 65/00, B21D 39/02

(54) **VERFAHREN UND VORRICHTUNG ZUM BEFESTIGEN EINES VERSTÄRKUNGSRAHMENS UM EINEN SCHIEBEDACHAUSSCHNITT**
METHOD AND DEVICE FOR FASTENING A REINFORCEMENT FRAME AROUND A SUNROOF SECTION
PROCEDE ET DISPOSITIF POUR FIXER UN CADRE DE RENFORT AUTOUR D'UNE PARTIE DECOUPEE POUR UN TOIT OUVRANT

(30) Priorität: 14.05.1996 DE 19619561
(43) Veröffentlichungstag der Anmeldung: 03.03.1999
(60) Teilanmeldung: 01104005.2
(73) Patentinhaber: Volkswagen Aktiengesellschaft, 38436 Wolfsburg (DE)
(72) Erfinder: NIEWÖHNER, Heino, D-38106 Braunschweig (DE)
(74) Vertreter: Fritz, Edmund Lothar, Dipl.-Chem.
(86) Internationale Anmeldenummer: EP9702422
(87) Internationale Veröffentlichungsnummer: WO9743165

(56) Entgegenhaltungen:
- DE-A- 3 640 941
- GB-A- 2 165 193

## Beschreibung

Die Erfindung betrifft ein Verfahren zum Befestigen eines Rahmens an einer Dachöffnung eines Kraftfahrzeuges.

Wenn im folgenden der Betreff "Schiebedach" verwendet wird, so beinhaltet dieser alle Varianten, z. B. Schiebeausstelldach, Ausstelldach, kleine und große Faltdächer etc. Mit der vorliegenden Erfindung können alle Kraftfahrzeug-Dachöffnungen mit einem Rahmen verbunden werden, unabhängig der Art und Weise und des Materials der in die Öffnung einsetzbaren Dachabdeckung.

Die Herstellung eines Schiebedaches in einem Kraftfahrzeug ist verhältnismäßig aufwendig, da zum Erhalt der Stabilität des Daches und einer sicheren Führung des Schiebedaches ein Hilfs- oder Verstärkungsrahmen um die Schiebedachöffnung befestigt wird. Bei der Herstellung des Kraftfahrzeuges wird hierzu üblicherweise in das (noch nicht mit der Karosserie verbundene Dach) nach oder während seiner Herstellung die Schiebedachöffnung ausgestanzt, wobei ein Bördelrand, der bezüglich des Daches nach innen gerichtet ist, aufgestellt wird. Anschließend wird um diesen Bördelrand der Verstärkungsrahmen gelegt, wobei ein Klebstoffauftrag auf dem Dachinneren und/oder auf dem Verstärkungsrahmen die Verbindung Dach/Verstärkungsrahmen unterstützt. Beim Auflegen des Verstärkungsrahmens wirkt der Bördelrand in der Schiebedachöffnung zentrierend. Anschließend wird das Dach mit dem Verstärkungsrahmen in eine Falzwerkzeugpresse eingelegt, in der der Bördelrand über den benachbarten Rand des Verstärkungsrahmens gefalzt wird. Nachteilig ist hierbei, dass die Falzwerkzeuge und Falzpressen neben ihrem hohen Anschaffungspreis auch einen verhältnismäßig hohen Platzbedarf aufweisen, wobei üblicherweise für die einzelnen Falzschritte (Vorfalzen, Fertigfalzen) mehrere Pressen benötigt werden. Auch die Infrastruktur für die Pressen ist aufwendig, da diese Sonderfundamente benötigen und damit ortsfest sind. Aufgrund der hohen Kosten der Falzwerkzeuge ist eine Veränderung, z. B. eine andere Größe der Schiebedachöffnung, sehr aufwendig und kostenintensiv.

Aus der DE-A 36 40 941 ist ein Verfahren zum Umbördeln eines Randbereichs eines Bleches bekannt, bei dem ein Außenteil, welches einen aufrechtstehenden Flansch aufweist, über den Umfang eines Innenteils gebördelt wird. Der Bördelvorgang erfolgt hier indem eine Abkantbacke auf einer Kreisbahn gegen das festgehaltene Außenteil verschoben wird, um so den hochstehenden Flansch umzubördeln. Dieses bekannte Verfahren ist für Bördelverfahren an Karosserieteilen wie z. B. Kofferraumdeckel oder zweiteilige Motorhauben geeignet. Es wird aber keine Anregung gegeben für die spezifische Problematik der Befestigung eines Verstärkungsrahmens in der Schiebedachöffnung eines Karosseriedachs.

Aus der GB-A 2 165 193 ist ein Verfahren zur Befestigung eines Schiebedachrahmens in der Dachöffnung eines Kraftfahrzeugs bekannt. Bei dem Befestigungsvorgang wird ein Dachteil in die Dachöffnung eingesetzt und ein Installationsteil wird auf die Dachöffnung gesetzt und dann wird das Schiebedachteil auf die Dachöffnung gepresst und durch eine Schraubverbindung befestigt. Dieses bekannte Verfahren gibt keine Anregung für die Befestigung eines Verstärkungsrahmens eines Schiebedachs in einer Dachöffnung der Karosserie mittels einer Bördelverbindung.

Aufgabe der vorliegenden Erfindung ist es, ein Verfahren zum Herstellen einer Bördel- bzw. Falzverbindung an einer Schiebedachöffnung zu schaffen, das preiswert und flexibel einsetzbar sein soll.
Diese Aufgabe wird gelöst durch ein Verfahren mit den Maßnahmen des Anspruchs 1. Die Unteransprüche beschreiben bevorzugte Ausführungsformen.

Bei dem erfindungsgemäßen Verfahren zum Befestigen des Rahmens in einer Dachöffnung des Kraftfahrzeuges ist erfindungswesentlich, daß nicht mit einer Presse, sondern mit einer Vorrichtung gearbeitet wird. D. h., das Dach wird nicht wie bisher üblich in eine Presse geschoben, in der zwei Preßwerkzeuge unter Umbördelung und Falzung des Randes der Öffnung aufeinander gepreßt werden, sondem das Dach wird gegen mindestens eine, insbesondere fünf bis acht oder noch mehr Abkantbacken geschoben, die sich im wesentlichen nur um den umzubördelnden Randbereich erstrecken und deren Dimensionierung im wesentlichen nur den benötigten Biegekräften entspricht. Diese Abkantbacken haben eine oder mehrere Bördelkanten, insbesondere bis vier, gegen die der Rand der Öffnung des Daches nacheinander geschoben wird. Ebenfalls erfindungswesentlich ist, daß sich die Abkantbacke bzw. die Abkantbacken innerhalb der Dachöffnung angeordnet sind, wenn das Dach gegen deren Bördelkanten geschoben wird. Hierdurch wird eine ausgesprochen kompakte Ausgestaltung der Vorrichtung möglich, so daß das Dach mit seiner Öffnung auf einen Arbeitstisch gelegt werden kann, wobei die Abkantbacken innerhalb des Arbeitstisches im Bereich der Dachöffnung angeordnet sind, so daß das Einlegen des Daches und Herausnehmen des Daches einfach und schnell von oben erfolgen kann, wo hingegen bei dem bisher verwendeten Pressen das Dach zwischen die Preßwerkzeuge eingelegt und ebenso entnommen werden muß.

Während des Bördelvorganges liegt das Dach bzw. Blech auf einem Bördelbett, das gegen die Abkantbacken verstellbar ist. Für einen sicheren Bördelvorgang können außerdem Niederhalter vorgesehen werden, der das Dach/Blech gegen das Bördelbett pressen, und Füllschieber, die den umzubördelnden Randbereich abstützen. Bevorzugt sind die Füllschieber in dem Niederhalter untergebracht.

Üblicherweise wird der Randbereich der Dachöffnung über den Randbereich des Rahmens gebördelt bzw. gefalzt; da zum einen hierdurch der Rahmen sicher am Dach gehalten wird und da das Dachmaterial in der Regel einige zehntel Millimeter dünner ist als der Rahmen. Vorteilhaft wird mindestens 80 % des Randbereiches umgebördelt, damit eine hochstabile Verbindung erhalten wird.

Ein besonderer Verfahrensschritt der vorliegenden Erfindung ist auch das Versetzen der Abkantbacken horizontal zur Öffnung (d. h. in der Öffnungsebene), während die Öffnung über den Abkantbacken liegt. Dieses Versetzen erfolgt vorzugsweise ohne eine Vertikalkomponente beim Versetzen, diese wird von dem Arbeitstisch, auf dem das Dach liegt, übernommen. Dieses horizontale Versetzen läßt sich mit verhältnismäßig einfachen Mitteln durchführen, wobei das Versetzen vorteilhaft in mehreren Schüben einzelner Abkantbacken erfolgt, d. h. ein oder mehrere (nicht jedoch alle) Abkantbacken werden zuerst horizontal versetzt (in die oder aus der Arbeitsposition) und anschließend werden ein oder mehrere weitere Abkantbacken (insbesondere alle verbliebenen) in dieselbe Richtung versetzt. Dieses Verfahren ermöglicht eine Umbördelung bzw. ein Erfassen des gesamten Randbereiches mit den Abkantbacken. Vorteilhaft werden hierbei die Abkantbacken für die Eckbereiche der Dachöffnung und mindestens eine, vorzugsweise vier oder mehr Abkantbacken für die im wesentlichen geraden Bereiche der Dachöffnung vorgesehen, wobei insbesondere die geraden Abkantbacken bzw. die Eckenabkantbacken gemeinsam versetzt werden. Hierdurch kann die Dachöffnung über die Abkantbacken geführt werden, von denen dann zuerst die Eckenabkantbacken und dann die Geradabkantbacken auf den Randbereich zugeschoben werden, wobei vorteilhaft bis zu 100 % des Randbereiches von den Abkantbacken überdeckt wird. Nach dem Hochfahren des Arbeitstisches (ggf. mehrmals) gegen die Abkantbacken werden diese nach dem Absinken des Tisches in umgekehrter Reihenfolge wieder zurückgezogen und das Dach mit dem eingebördelten bzw. gefalzten Rahmen entnommen. Zum Versetzen der Abkantbacken ist insbesondere eine Drehverstellung geeignet, d. h. an einer um ihre Längsachse drehbaren Welle (die ggf. auch als Scheibe ausgebildet sein kann) sind über deren Umfang verteilt Mitnehmer angeordnet, die mit den zugehörigen Abkantbacken gekoppelt sind. Durch Drehen der Welle werden die Mitnehmer gezogen bzw. geschoben und hierdurch werden die Abkantbacken zurück bzw. vorgefahren. Alternativ können die Abkantbacken von hydraulisch betriebenen Kolben-Zylinder-Einheiten verschoben werden (vorteilhaft je eine pro Abkantbacke), die vorteilhaft nach außen (nicht innerhalb der Schiebedachöffnung) gelegt sind. Die Abkantbacken sind vorzugsweise auf Führungen montiert.

Besonders vorteilhaft wird das Vorfahren (die Zustellbewegung) der Abkantbacken ausgenutzt, um den Randbereich in einer ersten Stufe, insbesondere um mindestens 45°, vorteilhaft um 60° bis 90°, umzubiegen. D. h., die Abkantbacken fahren gegen den Randbereich und kippen diesen um (Vorbördeln). Zur Abstützung des nicht umzubördelnden Randbereiches werden hier, wie oben beschrieben, vorteilhaft Füllschieber eingesetzt. Anschließend hebt sich das Bördelbett und preßt den vorgebördelten Randbereich gegen die Bördelkanten. Hierdurch kann mit ein oder zwei Bördelkanten je Bördelbacke der gesamte Bördel-/Falzvorgang durchgeführt werden.

Besonders vorteilhaft ist bei der vorliegenden Erfindung der Randbereich, der umgebördelt wird, nicht in der Dachebene, sondern aus dieser herausstehend angeordnet, insbesondere in einem Winkel von ca. 90°. Hierdurch ist ein besonders günstiger Eingriff des Randbereiches an den Bördelkanten der Abkantbacken möglich. Dieses Anheben des Randbereiches kann bereits in der Presse, in der das Dach gefertigt wird, ausgeführt werden.

Die zur Erfindung gehörende Bördelvorrichtung besitzt mehrere Abkantbacken, die,wie oben beschrieben, horizontal in einer Öffnung eines Bleches versetzbar sind, wobei auch hier das Versetzen vorzugsweise im wesentlichen nur horizontal erfolgt. Das Blech liegt auf einem Arbeitstisch (Bördelbett), mit dem das Blech gegen die Bördelkanten der Abkantbacken angehoben wird, wobei der Randbereich der Öffnung, vorzugsweise bis hin zu einem Falzen, umgebördelt wird.

Die Erfindung wird im folgenden anhand eines Ausführungsbeispiels und von Zeichnungen näher beschrieben.

Es zeigen:
- Figur 1: einen Ausschnitt eines Kraftfahrzeugdaches mit Verstärkungsrahmen für ein Schiebedach;
- Figur 2: den Randbereich der Öffnung und des Rahmens im Schnitt;
- Figur 3: eine Abkantbacke mit drei Bördelkanten;
- Figur 4: die Anordnung der einzelnen Abkantbacken in der Dachöffnung; und
- Figur 5: eine Abkantbacke mit einer Bördelkante.

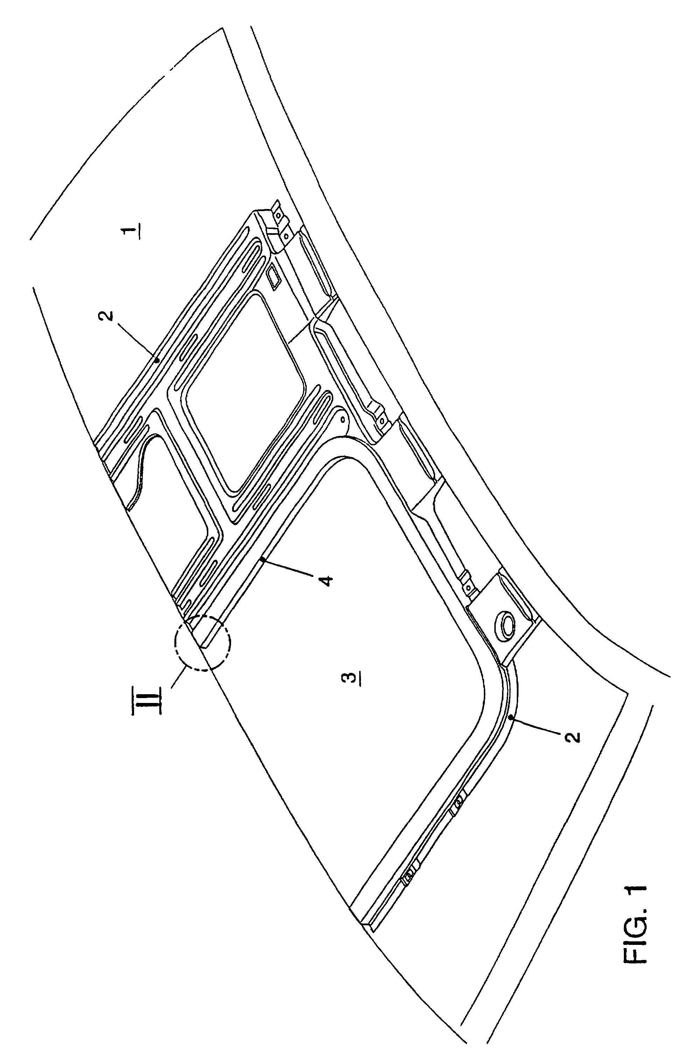

In Figur 1 ist ein geformtes Dachblech 1 (in Teildarstellung) dargestellt mit einem aufgelegten Verstärkungsrahmen 2, der eine Schiebeausstelldachöffnung 3 umgibt. Der Verstärkungsrahmen 2 ist einerseits durch Verklebung und andererseits durch einen um die gesamte Öffnung 3 umlaufenden Falzflansch 4 mit dem Dach 1 verbunden.

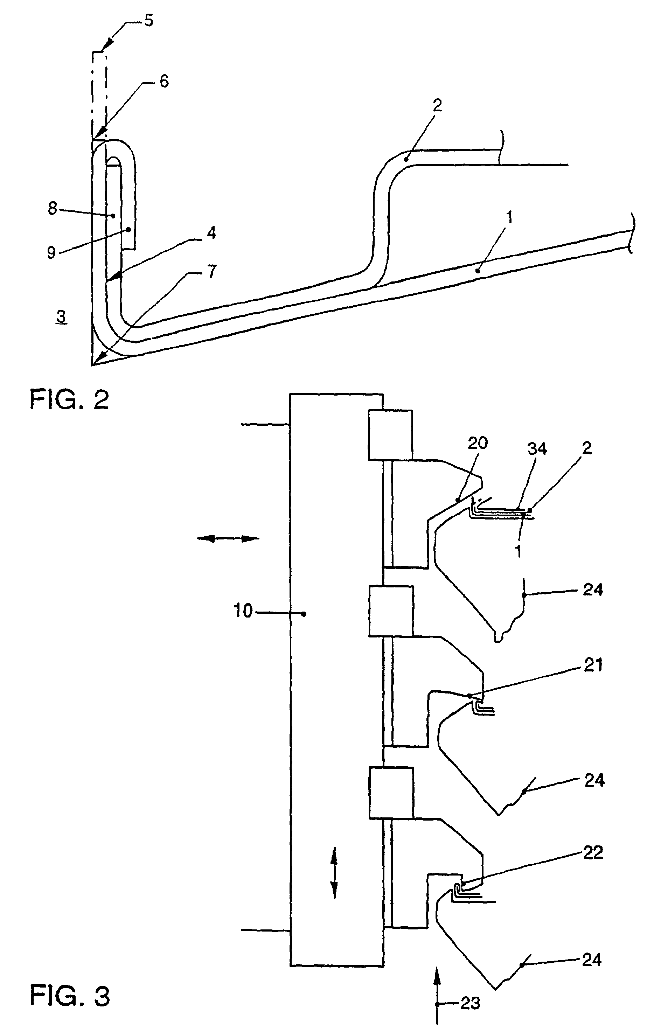

Ein Ausschnitt II des Falzflansches 4 ist in Figur 2 im Schnitt näher dargestellt. Wie bei 5 gestrichelt angedeutet, steht im ursprünglichen Zustand vor dem Falzen das Dachblech 1 im Bereich der Öffnung 3 über wenige Zentimeter als Bördelrand 6 ab. Der Bördelrand 6 steht in einem Winkel 7 von ca. 85° zur Ebene des Dachblechs 1 und ist zur Innenseite hin gerichtet. Der Bördelrand 6 dient außerdem zur Zentrierung des Verstärkungsrahmens 2, der unter anderem im Bereich des Bördelrandes 6 unter Zwischenlage einer Klebstoffschicht mit diesem verbunden wird. Nach dem Aufsetzen des Verstärkungsrahmens 2 über den Bördelrand 6 wird der überstehende Teil 5 des Bördelrandes 6 in einer Falzvorrichtung in mehreren Schritten über den Randbereich 8 des Verstärkungsrahmens 2 gefalzt 9.

Das Falzen erfolgt, wie in Figur 3 dargestellt, dreistufig an Abkantbacken 10 (bis 19), wobei jede Abkantbacke drei Bördelkanten 20 bis 22 enthält. Für einen sauberen Bördelvorgang hält ein Füllschieber 34 gegen den Randbereich 8. Die erste Bördelkante 20 dient dem Vorbördeln des überstehenden Dachrandes 5, die zweite Bördelkante 21 dient einem weiteren Vorbördeln und die Bördelkante 22 dem Fertigbördeln, wobei, wie mit dem Pfeil 23 dargestellt, das Dach mit dem Verstärkungsrahmen auf einem Falz- bzw. Bördelbett 24 liegend der Reihe nach den Bördelkanten 20 bis 22 zugeführt wird. Zwischen den einzelnen Bördelvorgängen wird die Abkantbacke 10 vor- und zurückgeschoben (Doppelpfeil).

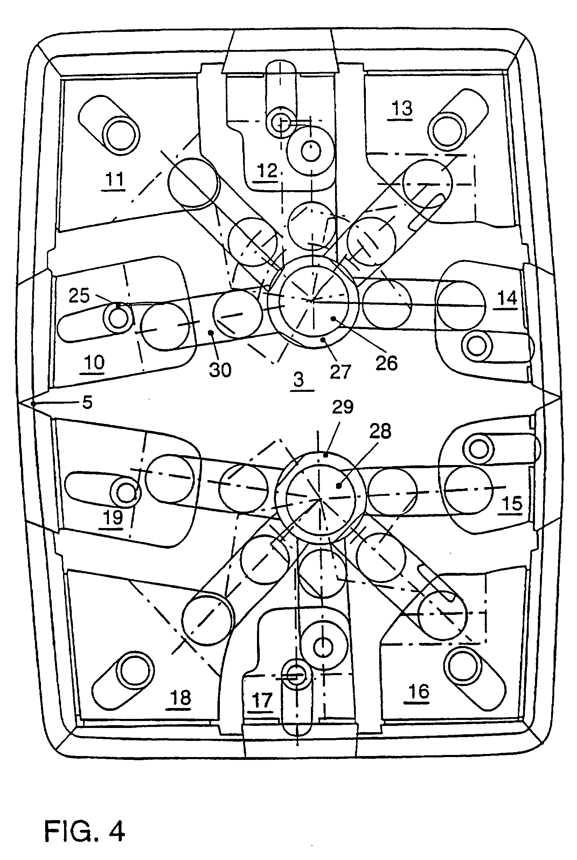

In Figur 4 ist die Anordnung der Abkantbacken 10 bis 19 in Draufsicht dargestellt, angeordnet in der Schiebedachöffnung 3. Die Abkantbacken 10 bis 19 sind als Schieber ausgebildet, die von Stiftführungen 25 geführt sind. Die Verstellung der Abkantbacken 10 bis 19 erfolgt über insgesamt vier Drehantriebe 26 bis 29, von denen immer zwei (26 und 27) bzw. (28 und 29) konzentrisch angeordnet sind. Die Abkantbacken 10, 12 und 14 sind über Mitnehmer 30 mit dem Drehantrieb 26 verbunden, die Abkantbacken 11 und 13 gleichermaßen mit dem Drehantrieb 27. Gleiches gilt für die Abkantbacken 15 bis 19. Aus der dargestellten Position werden die Abkantbacken 10, 12 und 14 durch Verdrehen des Drehantriebs 26 zurückgezogen, so daß die Abkantbacken 11 und 13 in ihren Seitenbereichen freiliegen und anschließend durch Drehen des Drehantriebs 27 ebenfalls zurückgezogen werden können. Hierdurch wird der Randbereich 6 der Öffnung 3 freigegeben, so daß das Dach entweder zu anderen Bördelkanten (21, 22) zugeführt bzw. der Vorrichtung entnommen werden kann.

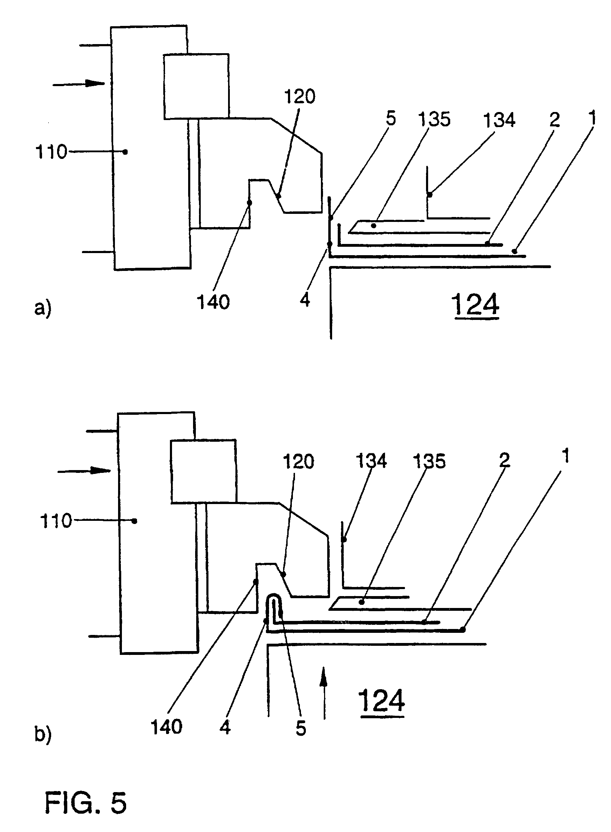

In der Figur 5 ist ein Falzvorgang dargestellt, der mit nur einer Bördelkante 120 auskommt. Bei diesem Verfahren fährt die Abkantbacke 110 zuerst mit der Bördelkante 120 gegen den umzubördelnden Kantenbereich 5 des Bleches 1, das auf einem Falz- bzw. Bördelbett 124 liegt. Über dem Blech 1 liegt der Hilfsrahmen 2, der von einem Niederhalter 134 gegen das Bördelbett 124 gepreßt wird. Aus dem Niederhalter 134 ist ein Füllschieber 135 ausgefahren, der den unteren Bereich des umzubördelnden Randbereiches 4 abstützt. Durch Verschieben der Abkantbacke 110 in Pfeilrichtung wird der obere Bereich 5 des umzubördelnden Randbereiches 4 in einem Winkel von ca. 90° in Richtung auf den Füllschieber 135 umgebördelt, wobei der Randbereich 4 bis zu einem Spalt 140 der Bördelkante 120 gelangt. Gleichzeitig fährt hierzu der Füllschieber 135 in den Niederhalter 134 zurück. Anschließend fährt das Bördelbett 124 (Pfeil in Figur 5b) nach oben, wodurch der umzubördelnde obere Randbereich 5 über den Hilfsrahmen 2 gefalzt wird. Die Abstützung des Randbereiches 4 kann auch durch einen (ggf. getrennt verfahrbaren) Teil des Bördelbettes 124 erfolgen.

Gegenüber den bisher verwendeten Falzpressen hat die erfindungsgemäße Falzvorrichtung den Vorteil eines deutlich geringeren Platzbedarfes, da mit einer Vorrichtung mehrstufig gearbeitet werden kann. Gleichzeitig benötigt die Falzvorrichtung bzw. das Verfahren kein Sonderfundament, wie sie für Falzpressen üblich sind, hierdurch ist die Falzvorrichtung auch nicht ortsgebunden. Hierdurch sind insgesamt niedrigere Entstehungskosten möglich.

## Patentansprüche

1. Verfahren zum Befestigen eines Rahmens an einer Dachöffnung eines Kraftfahrzeuges durch Ansetzen eines Randbereiches des Rahmens an einen Randbereich der Dachöffnung und Verbinden der Randbereiche durch Bördeln, insbesondere Falzen, bei dem das Dach gegen eine Bördelkante einer Abkantbacke verschoben wird, die sich in der Dachöffnung befindet bzw. sich durch die Dachöffnung erstreckt, bis einer der Randbereiche über den anderen umgebördelt ist.

2. Verfahren nach Anspruch 1, **dadurch gekennzeichnet, daß** der Randbereich der Dachöffnung über den Randbereich des Rahmens gebördelt wird.

3. Verfahren nach Anspruch 1 oder 2, **dadurch gekennzeichnet, daß** das Bördeln bis zum Erhalt einer Falzung durchgeführt wird.

4. Verfahren nach einem der Ansprüche, **dadurch gekennzeichnet, daß** das Dach gegen Bördelkanten mehrerer Abkantbacken gleichzeitig verschoben wird.

5. Verfahren nach Anspruch 4, **dadurch gekennzeichnet, daß** das Dach gegen mindestens fünf Abkantbacken verschoben wird.

6. Verfahren nach Anspruch 5, **dadurch gekennzeichnet, daß** das Dach gegen mindestens acht Abkantbacken verschoben wird.

7. Verfahren nach einem der Ansprüche 4 bis 6, **dadurch gekennzeichnet, daß** der umgebördelte Randbereich über mindestens 80 % der Dachöffnung umläuft.

8. Verfahren nach einem der Ansprüche 4 bis 7, **dadurch gekennzeichnet, daß** die Abkantbacken horizontal zur Öffnung in dieser in und aus ihrer Arbeitsposition versetzt werden.

9. Verfahren nach Anspruch 8, **dadurch gekennzeichnet, daß** die Abkantbacken in zwei oder drei Schüben einzelner Abkantbacken versetzt werden.

10. Verfahren nach Anspruch 9, **dadurch gekennzeichnet, daß** die Abkantbacken Eckenabkantbacken für Eckbereiche der Öffnung und mindestens einen Geradabkantbacken für gerade Abschnitte der Öffnung beinhalten, und daß beim horizontalen Versetzen der Abkantbacken der oder die Geradabkantbacken nach den Eckenabkantbacken in Richtung auf und vor den Eckenabkantbacken von dem Randbereich versetzt werden.

11. Verfahren nach einem der Ansprüche 8 bis 10, **dadurch gekennzeichnet, daß** die Backen mittels einer Drehverstellung in der Öffnung oder direkt mittels einer hydraulisch betriebenen Kolben-Zylinder-Einheit versetzt werden.

12. Verfahren nach einem der Ansprüche 8 bis 11, **dadurch gekennzeichnet, daß** die Abkantbacken beim Versetzen in ihre Arbeitsposition gegen den umzubördelnden Randbereich fahren und diesen vorbördeln.

13. Verfahren nach einem der vorhergehenden Ansprüche, **dadurch gekennzeichnet, daß** der Randbereich, der umgebördelt wird, aus der Dachebene heraussteht, insbesondere in einem Winkel von mindestens 45°.

14. Verfahren nach einem der vorhergehenden Ansprüche, **dadurch gekennzeichnet, daß** das Dach mit seiner Außenseite nach unten gerichtet gegen die Bördelkante/n angehoben wird.

15. Verfahren nach einem der vorhergehenden Ansprüche, **dadurch gekennzeichnet, daß** der Randbereich in ein bis drei Stufen umgebördelt wird.

## Claims

1. Method of fastening a frame to a roof opening in a motor vehicle by positioning an edge region of the frame against an edge region of the roof opening and connecting the edge regions by beading, and in particular by folding, wherein the roof is moved towards a beading edge of a bending jaw which is situated in the roof opening or extends through the roof opening until one of the edge regions has been beaded over the other.

2. Method according to claim 1, **characterised in that** the edge region of the roof opening is beaded over the edge region of the frame.

3. Method according to claim 1 or 2, **characterised in that** the beading is carried out until a full fold is obtained.

4. Method according to one of the claims, **characterised in that** the roof is moved towards beading edges of a plurality of bending jaws simultaneously.

5. Method according to claim 4, **characterised in that** the roof is moved towards at least five bending jaws.

6. Method according to claim 5, **characterised in that** the roof is moved towards at least eight bending jaws.

7. Method according to one of claims 4 to 6, **characterised in that** the beaded-over edge regions extends around at least 80% of the roof opening.

8. Method according to one of claims 4 to 7, **characterised in that** the bending jaws are moved into and out of their working positions in the opening and horizontally in relation thereto.

9. Method according to claim 8, **characterised in that** the bending jaws are moved in two or three shifts of individual bending jaws.

10. Method according to claim 9, **characterised in that** the bending jaws comprise corner bending jaws for the corner regions of the opening and at least one straight bending jaw for straight sections of the opening, and **in that** when the bending jaws are moved horizontally, the straight bending jaw or jaws are moved towards the edge region after the corner bending jaws and are moved away from the edge region before the edge bending jaws.

11. Method according to one of claims 8 to 10, **characterised in that** the jaws are displaced in the opening by rotary motive means or directly by means of a hydraulically operated piston and cylinder unit.

12. Method according to one of claims 8 to 11, **characterised in that** when displaced to their working position the bending jaws travel towards the edge region to be beaded over and pre-bead it.

13. Method according to one of the foregoing claims, **characterised in that** the edge region which is beaded over projects out of the plane of the roof, in particular at an angle of at least 45°.

14. Method according to one of the foregoing claims, **characterised in that** the roof is lifted towards the bending edge(s) with its outer side directed downwards.

15. Method according to one of the foregoing claims, **characterised in that** the edge region is beaded over in one to three stages.

## Revendications

1. Procédé de fixation d'un cadre sur une ouverture du toit d'un véhicule automobile par ajustement d'une zone de bord du cadre sur une zone de bord de l'ouverture du toit et jonction des zones de bord par bordage, en particulier par pliage, dans lequel le toit est déplacé contre une arête de bordage d'un mors de pliage, qui se trouve dans l'ouverture du toit ou s'étend à travers l'ouverture du toit jusqu'à ce que l'une des zones de bord soit rabattue sur l'autre.

2. Procédé selon la revendication 1, **caractérisé en ce que** la zone de bord de l'ouverture du toit est rabattue sur la zone de bord du cadre.

3. Procédé selon la revendication 1 ou 2, **caractérisé en ce que** le bordage est réalisé jusqu'à ce que soit produit un pliage.

4. Procédé selon l'une quelconque des revendications précédentes, **caractérisé en ce que** le toit est déplacé simultanément contre des arêtes de bordage de plusieurs mors de pliage.

5. Procédé selon la revendication 4, **caractérisé en ce que** le toit est déplacé contre au moins cinq mors de pliage.

6. Procédé selon la revendication 5, **caractérisé en ce que** le toit est déplacé contre au moins huit mors de pliage.

7. Procédé selon l'une quelconque des revendications 4 à 6, **caractérisé en ce que** la zone de bord rabattue s'étend sur au moins 80% de l'ouverture du toit.

8. Procédé selon l'une quelconque des revendications 4 à 7, **caractérisé en ce que** les mors de pliage sont déplacés horizontalement vers l'ouverture dans celle-ci en position de travail et hors de position de travail.

9. Procédé selon la revendication 8, **caractérisé en ce que** les mors de pliage sont déplacés par deux ou trois poussées de mors de pliage individuels.

10. Procédé selon la revendication 9, **caractérisé en ce que** les mors de pliage présentent des mors de pliage de coins pour les zones de coin de l'ouverture et au moins un mors de pliage droit pour les sections droites de l'ouverture, et **en ce que**, lors du déplacement horizontal des mors de pliage, le ou les mors de pliage droit sont déplacés de la zone de bord vers les mors de pliage de coins dans la direction des mors de pliage de coins et devant ceux-ci.

11. Procédé selon l'une quelconque des revendications 8 à 10, **caractérisé en ce que** les mors sont déplacés par un déplacement en rotation dans l'ouverture ou directement au moyen d'une unité à piston-cylindre à entraînement hydraulique.

12. Procédé: selon l'une quelconque des revendications 8 à 11, **caractérisé en ce que** les mors de pliage, lors du déplacement dans leur position de rotation, se déplacent contre la zone de bord à rabattre et réalisent un pré-rabattement.

13. Procédé selon l'une quelconque des revendications précédentes, **caractérisé en ce que** la zone de bord, qui est rabattue, ressort du plan du toit, en particulier sous un angle d'au moins 45°.

14. Procédé selon l'une quelconque des revendications précédentes, **caractérisé en ce que** le toit est relevé par son côté extérieur vers le bas contre l'arête ou les arêtes de bordage.

15. Procédé selon l'une quelconque des revendications précédentes, **caractérisé en ce que** la zone de bord est rabattue en une à trois étapes.
